# EUROPEAN PATENT APPLICATION

(11) **EP 1 640 132 A1**
(43) Date of publication of application: **29.03.2006**
(21) Application number: 04746280.9
(22) Date of filing: 23.06.2004
(51) Int. Cl.: B29C 33/38, G11B 7/26

(54) **OPTICAL DISC MOLDING DIE HAVING STAMPER HOLDING SURFACE APPLIED WITH HEAT INSULATING LAYER AND DIAMOND-LIKE CARBON FILM, AND MOLDING METHOD USING IT**

(30) Priority: 24.06.2003 JP 2003179291
(71) Applicant: TDK Corporation, Chuo-ku, Tokyo 103-8272 (JP)
(72) Inventor: NAKAYAMA, Masatoshi, Chuo-ku, Tokyo 103-8272 (JP)
(74) Representative: Hirsch & Associés
(86) International application number: PCT/JP2004/008811
(87) International publication number: WO 2004/113045

(57) **Abstract**

A mold for molding optical discs is provided which has decreased molding cycle time and increased life of use of the mold, using a stamper-holding surface in a molding cavity of a mold, a heat insulation layer integrally formed on the surface and a diamond-like carbonaceous layer integrally formed on the heat insulation layer, said diamond-like carbonaceous layer has a composition represented by the following formula: CHₐO_{b}N_{c}F_{d}BₑP_{f} where a = 0.05 - 0.7, b = 0 - 1, c = 0 - 1, d = 0 - 1, e = 0 - 1 and f = 0 - 1, in terms of atomic ratio.

## Description

### [Technical field]

The present invention relates to a mold for producing optical discs using a stamper (master molding plate) and a method of producing optical discs using the mold.

### [Background of the invention]

### [Prior art]

Optical discs are generally produced using the injection molding method. A molding cavity is formed between opposing surfaces of a fixed mold half and a movable mold half and a stamper having an information pattern on a surface in the form of pits or other irregularity according to information is mounted on a holding surface of one of the fixed and movable mold halves, a molten resin is injected into the cavity, and the mold is cooled to solidify the resin so that optical discs having an information pattern transferred from the stamper are produced.

With such mold and stamper, it is necessary one hand to heat the mold and the stamper to or above a predetermined temperature so that every corner of the information pattern of the stamper surface is completely filled with an injected molten resin to transfer the precise information pattern to the resin and it is necessary on the other hand to cool the mold and stamper from outside so that the molded optical disc is quickly cooled and solidified. However, in order to raise the temperature of the cooled cavity surface and the stamper to or above the predetermined temperature it is required either to raise the temperature of the molten resin to be injected or to lengthen the contact period of time with the molten resin, resulting in problems of a time period for one injection molding (cycle time) being long and a productivity (shortening of the cycle time and number of injection shots per unit time) being low.

To solve this problem, JP 2002-361689 A, JP 2002-513691 A and JP 2001-334534 A proposed various techniques to heat-insulate the stamper by providing a heat insulating layer on the surface of the mold cavity where the stamper is held or supported, thereby shortening the cycle time.
JP 2002-361689 A discloses to fixedly attach to the back surface of a stamper or within a stamper a heat insulating layer having a low thermal conductivity (less than 94 W/mK) such as ceramic material (100 - 300 *µ*m thick), bismuth (250 - 300 *µ*m thick), polyamide or polyamide-imide (20 - 150 *µ*m thick) whereby heat is temporary stored at the time of filling of a molten resin to the cavity so as to increase the transfer efficiency, while the cooling is quickly done by a metallic mold cooled to a temperature by 10 - 20°C lower than the stamper so as to raise the productivity.
JP 2002-513691 A discloses a technique to enhance the transfer performance of optical discs by applying a heat insulating coating, such as polyimide, polyetherimide or siloxane-modified polyetherimide, having a thickness of about 10 - 500 *µ*m on the back surface (the surface contacting the mold) of the stamper (insert).
JP 2001-334534 A discloses to form a heat insulating layer of polyimide of a thickness of the order of 20 - 150 *µ*m on the back surface of the stamper to enhance the transfer property of optical discs and cut the cycle time with a lower temperature of the mold.
A further proposal is that a thick removable heat insulating plate is inserted between the surface of the mold and the stamper.

However, although the stamper having on its back surface a heat insulating layer such as polyimide, polyamide-imide, ceramics, bismuth or the like can reduce the cycle time for molding, it has a drawback that the friction between the stamper and the mold is increased, whereby the life of use of the stamper and the stamper-holding surface of the mold is shortened, and thus the number of shots before the stamper has to be exchanged and the number of shots before the mold has to be exchanged are significantly shortened.
Further, in case the stamper and the heat insulating layer is integrally formed, there is a problem that a strain is developed in the stamper due to the difference in thermal expansion coefficient between the stamper and the stamper-holding surface of the stamper, hindering a proper molding operation.

[Patent document 1] JP 2002-361689 A
[Patent document 2] JP 2002-513691 A
[Patent document 3] JP 2001-334534 A
[Problem to be solved by the invention]

The stamper having on its back surface a heat insulating layer, such as polyimide, polyamideimide, ceramics and bismuth, disclosed in JP 2002-361689 A, JP 2002-513691 A and JP 2001-334534 A has a drawback that the friction between the insulating layer of the stamper and the mold is increased, whereby the life of use of the stamper and the stamper-holding surface of the mold is shortened, and thus the number of shots before the stamper has to be exchanged and the number of shots before the mold has to be exchanged are significantly shortened.
That is, although a thick heat insulating layer of 20 - 250 *µ*m is present between the stamper and the stamper-holding surface of the mold to improve the heat insulation of the stamper or retardation of cooling of the stamper, the large friction between the stamper-holding surface of the mold and the heat insulating layer formed on the back surface of the stamper generates scratches on the mutually contacting surfaces which deform the transfer surface (information bearing surface) of the stamper, and the deformation makes a precise transfer of information impossible, leading to significantly shortening the life of use of the stamper. There has not been any trial in the art to improve the durability of the stamper having a heat insulating layer.
Further, where the stamper and the heat insulating layer is integrally formed, there is a problem that a strain is developed in the stamper due to the difference in thermal expansion coefficient between the stamper and the stamper-holding surface of the stamper, hindering a proper molding operation.
Therefore, the object of the present invention is to solve the above-mentioned problems, by improving durability of the stamper and the mold, in other words, remarkably enhancing the number of shots before one stamper has to be exchanged and the number of shots before one mold has to be exchanged.

### [Means for solving the problem]

The present invention solves the problem by providing a mold for molding optical discs which comprises a stamper-holding surface in a molding cavity of a mold, a heat insulation layer integrally formed on the surface and a diamond-like carbonaceous layer integrally formed on the heat insulation layer.

The present invention also provides a method for molding optical discs comprising steps of mounting a stamper having an information pattern surface onto a stamper holding surface in a molding cavity of a mold, and injecting a molten resin material into the cavity.

With respect to the diamond-like carbon (DLC) layer, reference can be made to, for example, Japanese Patent Application Kokai Nos. 62-145646 and 62-145647, and New Diamond Forum, Vol. 4 No. 4 (issued in October 25, 1988). As is described in the above-mentioned document (New Diamond Forum), Raman spectroscopic analysis showed that the DLC layer has a broad peak of Raman scattering spectrum at 1400 - 1700 cm-1, which is different from diamond having a narrow peak at 1333 cm-1, and graphite having a narrow peak at 1581 cm-1, which in turn suggests that the DLC layer has distinctively different structure from the others. The broad peak observed in Raman spectroscopic analysis spectrum of the DLC layer is subject to change, due to the change in the elements included, other than carbon and hydrogen. The DLC layer is an amorphous thin layer mainly composed of carbon atoms and hydrogen atoms, which carbon atoms are randomly bonded via sp² and sp³ bonds.

### [Best mode for carrying out the invention]

The insulating layer to be used in the present invention is preferably composed of materials selected from: porous sintered materials including ceramics, such as alumina, silicon oxide, SiC, zirconia and the like, glass, and hard metal; and heat-resistant synthetic resins, such as polyimide and polyamide-imide. These substances are selected on the basis of the affinity with the diamond-like carbonaceous layer. The thickness of the insulating layer is preferably 0.1 *µ*m - 1.0 cm. When the surface of the insulating layer is not smooth, it is preferred that polishing be conducted prior to the formation of the diamond-like carbonaceous layer.
In the case when ceramic is used, flame spraying, ion plating, CVD method, pasting a plate or a film and sputtering can be used on the stamper-holding surface of the mold.
When glass is used, flame spraying, sputtering and pasting a plate or a film can be used.
In the case of heat-resistant synthetic resins, pasting a plate or a film, application of paint, filling of molten resin and the like can be used.

In the present invention, between the insulating layer and the diamond-like carbonaceous layer, a mutually contacting layer having a thickness of approximately 0.01 - 3 *µ*m can be formed. For the mutually contacting layer, reference can be made to, for example, Japanese Patent Application Kokai No. 4-341558 which describes an Mo film, Japanese Patent Application Kokai No. 5-142875 which describes an amorphous film of carbon and silicon, Japanese Patent Application Kokai No. 2000-177046 which describes a silicon carbide film and a metal film made of silicide of at least one member selected from V, Nb, Ta, Cr, Mo, W, Ti and Zr, Japanese Patent Application Kokai No. 2000-178736 which describes a membrane made of silicide of at least one member selected from V, Nb, Ta, Cr, Mo, W, Ti and Zr, Japanese Patent Application Kokai No. 2000-178737 which describes a laminated film consisting of a metal film mainly composed of 5A metal of the periodic table and an Si film mainly composed of Si, and Japanese Patent Application Kokai No. 2000-178738 which describes an amorphous diamond-like carbonaceous layer having a gradient of oxygen contained.

The composition of the diamond-like carbonaceous layer to be used in the present invention mainly comprises carbon and hydrogen, and may include other additional components. The composition is preferably represented by the following formula:

CHₐO_{b}N_{c}F_{d}BₑP_{f}

where a = 0.05 - 0.7, b = 0 - 1, c = 0 - 1, d = 0 - 1, e = 0 - 1 and f = 0 - 1, in terms of atomic ratio.
The thickness of the diamond-like carbonaceous layer is preferably 0.01 - 10 *µ*m, more preferably 0.03 - 3.0 *µ*m.

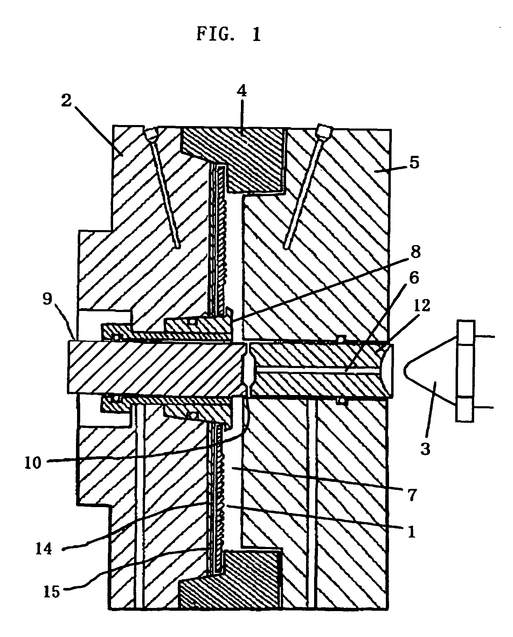

Fig. 1 shows an embodiment of the injection molding device to be used for production of optical discs, where molten resin is injected into a mold cavity formed between opposing surfaces of the movable mold half holding a stamper (master molding plate) and a fixed mold half, pressure is applied and the resin is cooled, thereby obtaining a molded article with the surface pattern of the stamper transferred onto the molded article. The mold comprises a movable mold half 2 and a fixed mold half 5. When a movable mold is closed, a molding cavity 7 is formed between the halves. With respect to the movable mold 2, the mirror-polished surface on the side of the cavity 7 holds a metal stamper 1 in the form of sheet. The outer portion of the stamper is fixed with the outer ring 4 and/or the inner portion is fixed with the inner ring 8. The outer ring 4 also serves as a circumference wall of the cavity 7. Fig. 1 shows the mold in closed position, and the cavity 7 is formed. With this position, resin is injected from the feed inlet 3 through a gate 6 of the gate member 12 into the cavity 7 under a predetermined molding pressure, thereby conducting molding, with the information pattern (irregularity) on the surface of the stamper 4 being transferred to the resin. During the molding or after the molding, the tip of the gate cutting member 9 sticks in resin, and the center portion of the optical disc is cut out with the gate cutting portion 10, so as to form a central hole. The movable mold and the fixed mold have a cooling path system (not shown), in which the cooling water circulates to cool the mold portion surrounding the cavity.

According to the present invention, an insulating layer 14 and a diamond-like carbonaceous layer 15 are integrally formed directly or via a metal film on the mirror surface of the stamper-holding movable mold 2 on the side of the cavity. With this structure, even though the stamper 1 repeatedly experiences thermal expansion and cooling shrinkage during molding, the friction with the diamond-like carbonaceous layer is low, and the friction does not generate scratch on the back surface of the stamper and the surface of the mold. Therefore, the quality of the stamper and the mold can be maintained for a long period. At the same time, due to the heat-insulating effect of the insulating layer, the cycle time for molding can be shortened, and finally, the service life of the mold can be remarkably extended.

### (Formation of the diamond-like carbonaceous layer)

A diamond-like carbonaceous layer (hereinbelow, simply referred to as "DLC layer") can be formed by, for example, plasma CVD method, ionization deposition method and ECR plasma CVD method, and in addition, sputtering method can be used.
With respect to the plasma CVD method used for forming the DLC layer, reference can be made to, for example, Japanese Patent Application Kokai No. 4-41672. The plasma to be used in plasma CVD method may be either direct current or alternating current. Alternating current can range from a few hertz to microwave. In addition, ECR plasma described in, for example, "Diamond thin-film technique" (published by Technology Center) can be used. Moreover, a bias voltage can be applied.

When the DLC layer is formed using plasma CVD method, the material gas is preferably selected from the following group of compounds.
Examples of the compounds containing C and H include hydrocarbons, such as methane, ethane, propane, butane, pentane, hexane, ethylene and propylene.
Examples of the compounds containing C+H+O include CH₃OH, C₂H₅OH, HCHO and CH₃COCH₃.
Example of the compounds containing C+H+N include ammonium cyanide, hydrogen cyanide, monomethylamine, dimethylamine, allylamine, aniline, diethylamine, acetonitrile, azoisobutane, diallylamine, ethylamine, MMH, DMH, triallylamine, trimethylamine, triethylamine and triphenylamine.

In addition, the above-mentioned compounds can be used in combination, or used together with O sources, ON sources, N sources, H sources, F sources, B sources, P sources and the like.

The flow rate of the above-mentioned material gas can be selected depending on the types of the material gas. In general, it is preferred that the operating pressure be 1 - 200 Pa and the input power be 10 W - 5 kW.

In the present invention, ionization deposition method and the like can be used for forming the DLC layer. With respect to ionization deposition method, reference can be made to, for example, Japanese Patent Application Kokai No. 59-174508, Japanese Patent Application Kokai No. 2-22012 and Japanese Patent Application Kokai No. 10-202668. It should be noted that the methods and the devices are not limited to the disclosed ones, and other types of ionization deposition technique can be applied, if it is possible to accelerate the material ionization gas.

In ionization deposition method, the inside of the vacuum container is kept under the high-vacuum of approximately 10⁻⁴ Pa. This vacuum container is equipped with a filament therein which generates thermoelectrons when heated by the alternating-current power supply. This filament is sandwiched by an electrode couple, and voltage Vd is applied to the filament. In addition, an electromagnetic coil which generates a magnetic field for capturing ionized gas is placed in such manner that it surrounds the filament and the electrode couple. The material gas collides with the thermoelectrons from the filament, and generates positive thermolytic ions and electrons. This positive ion is accelerated by negative potential Va applied to the grid. By adjusting Vd, Va and the magnetic field of the coil, the composition and the quality of the layer can be altered. In addition, a bias voltage can be applied.

When the DLC layer is formed by ionization deposition method, the same material gas as in the case of plasma CVD method can be used. The flow rate of the material gas can be selected depending on the type of the gas. In general, the operating pressure is preferably 1 - 70 Pa.

It is also possible to form the DLC layer by sputtering method. In this case, gases such as O₂, N₂, NH₃, CH₄ and H₂ as reactive gas can be introduced, in addition to sputter gas, such as Ar and Kr. In addition, C may be used as a target, or mixed target containing C, N, O and the like or two or more targets may be used. Polymer can be used as a target. With the use of such targets, a radiofrequency power, an alternating-current power or a direct current power is applied, thereby sputtering the target; and the sputter is accumulated on the substrate, thereby forming a DLC layer. The radio-frequency sputtering power is generally 10 W - 5 kW. In general, the operating pressure is preferably 10⁻³ - 0.1 Pa.

With the used of such targets, the radio-frequency power is applied, thereby sputtering the target, and the sputter is accumulated on the surface of the insulating layer fixedly formed on the mold, thereby forming a DLC layer. In this case also, a negative bias voltage is used for applying bias to the mold. The bias voltage is preferably direct current. Alternatively, self-bias can be applied instead of the bias voltage. The bias voltage is preferably -10 ~ -2000 V, more preferably -50 ~ -1000 V. The radio-frequency sputtering power is generally 10W - 5 kW. In general, the operating pressure is preferably 0.0013 - 0.13 Pa.

Prior to the formation of the insulating layer and the diamond-like layer, the stamper-holding surface of the mold should be subjected to mirror polishing. In the case that the insulating layer is formed by CVD method or sputtering method, the surface layer can be cleaned by vapor-phase etching using a gas, such as Ar and Kr.

### (Formation of a mutually contacting layer)

In the present invention, the mutually contacting layer formed between the insulating layer and the diamond-like carbonaceous layer can be obtained from a proper material by substantially the same method as the above-mentioned method for forming DLC layer.

### [Examples]

### Example 1

The cavity surface of the mold holding the stamper was subjected to mirror polishing, an SiC layer having a thickness of 0.5 mm was formed by flame spraying, the surface was subjected to polishing, and a diamond-like carbonaceous layer having a thickness of 1.5 *µ*m was formed thereon. It should be noted that the diamond-like carbonaceous layer was formed by a self-bias RF plasma CVD method, under the following conditions: material gas: C₂ H₄ (0.017 Pa · m³ · s⁻¹ ), electric source: RF, operating pressure: 66.5 Pa, input power: 500 W, layer-forming rate: 100 nm/min. The composition of the layer was CH_{0.21}, and the resultant carbon layer was a diamond-like carbonaceous layer.

### Example 2

Substantially the same procedure as in Example 1 was repeated for making layers, except that Al₂ O₃ was used instead of SiC. For a mutually contacting layer, an SiO layer having a thickness of 0.1 *µ*m was formed by sputtering method.

### Example 3

Substantially the same procedure as in Example 1 was repeated for making layers, except that Pyrex (product name) was used instead of SiC. For a mutually contacting layer, an Si layer having a thickness of 0.1 *µ*m was formed by sputtering method.

### Example 4

Substantially the same procedure as in Example 1 was repeated, except that a polyimide film having a thickness of 50 *µ*m was placed on the mirror surface of the mold cavity for holding the stamper, and the edges were fixed with bolts made of Teflon (product name), instead of flame-spraying SiC. For a mutually contacting layer, an Si layer having a thickness of 0.1 *µ*m was formed by sputtering method.

### Example 5

Substantially the same procedure as in Example 1 was repeated, except that an SiC layer having a thickness of 0.1 mm was formed by sputtering method on the mirror surface of the mold cavity opposing to the stamper, instead of flame-spraying SiC.

### Comparative Examples 1 - 4

Substantially the same procedures were repeated as in Examples 1 - 4, except that the diamond-like carbonaceous layers were not used.

### Comparative Example 5

The cavity surface of the mold holding the stamper was subjected to mirror polishing, and a diamond-like carbonaceous layer having a thickness of 1.5 *µ*m was directly formed thereon, according to the procedure in Example 1.

In each of the above-mentioned Examples and Comparative Examples, injection molding was conducted for molding the optical discs, using a mold having the predetermined layers.
The results are shown in Table 1. In Table 1, the term "cycle time" means a relative value when the cycle time in Comparative Example 5 is defined as 1; "stamper life" is the number of shots that one stamper can be used without causing any poor molding performance; and "mold life" is the number of shots before one stamper-holding surface of one mold has to be exchanged.

**[Table 1]**

| | Cycle time | | Stamper life (unit: ten thousand shots) | Mold life (unit: ten thousand shots) | |
|---|---|---|---|---|---|
| | CD-R | DVD-R | | CD-R | DVD-R |
| Example 1 | 0.533 | 0.612 | 39 | 285 | 188 |
| Example 2 | 0.545 | 0.621 | 42 | 290 | 183 |
| Example 3 | 0.513 | 0.593 | 41 | 288 | 185 |
| Example 4 | 0.525 | 0.606 | 43 | 292 | 188 |
| Example 5 | 0.481 | 0.557 | 45 | 298 | 193 |
| Comparative Example 1 | 0.535 | 0.615 | 2.9 | 0.4 | 0.2 |
| Comparative Example 2 | 0.547 | 0.623 | 2.5 | 0.5 | 0.4 |
| Comparative Example 3 | 0.515 | 0.596 | 2.6 | 0.5 | 0.3 |
| Comparative Example 4 | 0.527 | 0.610 | 2.7 | 0.6 | 0.4 |
| Comparative Example 5 | 1.00 | 1.00 | 40 | 280 | 180 |

As is apparent from the results shown in Table 1, the stamper life in the present invention is 10 or more times as long as that of the conventional mold having only an insulating layer, and the mold life in the present invention is several hundreds times as long as that of the conventional mold, while the cycle time was maintained about the same (from the comparison with the results of Comparative Examples 1-4). Moreover, in the present invention, it became possible to remarkably shorten the cycle time for molding as compared with the conventional mold having only a diamond-like carbonaceous layer.

### [Effect of the invention]

Conventional stamper having a insulating layer has problems in that, a large friction between the stamper-holding surface of the molding cavity for injection molding and the insulating layer on the back surface of the stamper generates scratches on the contacting surfaces, which deforms the transfer surface of the stamper, and at an early stage the deformation makes a precise transfer of information pattern impossible, leading to shortening the life of stamper; and when the stamper and the insulating layer are integrally formed, difference in thermal expansion coefficient between them develops strain in the stamper, hindering a proper molding operation. On the other hand in the present invention, an insulating layer is formed on the stamper-holding surface of the molding cavity, and a diamond-like carbonaceous layer is integrally formed on the surface, which makes it possible to remarkably improve the life of the stamper (the number of shots before the stamper has to be exchanged), as well as the life of the mold (the number of shots before the mold has to be exchanged).

### [Brief description of the drawings]

[Fig. 1] Fig. 1 shows an embodiment of the injection molding layer for practicing injection molding in the present invention.

## Claims

1. A mold for molding optical discs which comprises a stamper-holding surface in a molding cavity of a mold, a heat insulation layer integrally formed on the surface and a diamond-like carbonaceous layer integrally formed on the heat insulation layer.

2. A mold for molding optical discs according to Claim 1, wherein said heat insulation layer is formed of a material selected from the group consisting of ceramic, glass, sintered materials, and heat-resistant synthetic resins.

3. A mold for molding optical discs according to Claim 1 or 2, wherein the diamond-like carbonaceous layer has a composition represented by the following formula:
CHₐO_{b}N_{c}F_{d}BₑP_{f}
(where a = 0.05 - 0.7, b = 0 - 1, c = 0 - 1, d = 0 - 1, e = 0 - 1 and f = 0 - 1, in terms of atomic ratio).

4. A mold for molding optical discs according to any one of Claims 1 - 3, wherein the heat insulation layer has a thickness of 0.1 *µ*m-1.0 cm.

5. A mold for molding optical discs according to any one of Claims 1 - 4, wherein the thickness of the diamond-like carbonaceous layer is 0.01-10.0 *µ*m.

6. A method for molding optical discs comprising steps of: mounting a stamper having an information pattern surface onto a stamper holding surface in a molding cavity of a mold according to any one of Claims 1 - 5, and injecting a molten resin material into the cavity.
